# EUROPÄISCHE PATENTSCHRIFT

(11) **EP 2 059 561 B1**
(45) Veröffentlichungstag und Bekanntmachung des Hinweises auf die Patenterteilung: **29.12.2010**
(21) Anmeldenummer: 07820013.6
(22) Anmeldetag: 31.08.2007
(51) Int. Cl.: C08K 5/548, C09D 183/08, C08J 7/04, C09D 4/00, C08G 77/28, C09J 5/02, C03C 17/30

(54) **WÄSSRIGE HAFTMITTLERZUSAMMENSETZUNG UMFASSEND EIN AMINOSILAN UND EIN MERCAPTOSILAN**
AQUEOUS ADHESION PROMOTER COMPOSITION COMPRISING AN AMINOSILANE AND A MERCAPTOSILANE
COMPOSITION D'AGENT ADHÉSIF À BASE AQUEUSE COMPRENANT UN AMINOSILANE ET UN MERCAPTOSILANE

(30) Priorität: 31.08.2006 EP 06119931
(43) Veröffentlichungstag der Anmeldung: 20.05.2009
(73) Patentinhaber: SIKA TECHNOLOGY AG, CH-6340 Baar (CH)
(72) Erfinder: SUTTER, Jolanda, CH-4104 Oberwil (CH); HUCK, Wolf-Rüdiger, CH-8044 Zürich (CH)
(74) Vertreter: Sika Patent Attorneys
(86) Internationale Anmeldenummer: PCT/EP2007/059130
(87) Internationale Veröffentlichungsnummer: WO 2008/025846

(56) Entgegenhaltungen:
- EP-A1- 1 582 571

## Beschreibung

### Technisches Gebiet

Die Erfindung betrifft das Gebiet der wässrigen Haftvermittlerzusammensetzungen.

### Stand der Technik

Haftvermittlerzusammensetzungen werden seit langem verwendet, um die Haftung zu verbessern. Typischerweise basieren derartige Zusammensetzungen auf Organosilanen. Insbesondere werden derartige Haftvermittlerzusammensetzungen als Primer, d.h. als Haftverbesserungsvoranstrich, verwendet. Derartige Zusammensetzungen oder Primer weisen üblicherweise inerte leicht flüchtige Lösungsmittel auf, um ein schnelles Ablüften zu gewährleisten. Allerdings kommen Lösungsmittel, besonderes solche, welche als VOC (Volatile Organic Compounds) bezeichnet werden, zunehmend unter Beschuss und der Markt verlangt zunehmen lösungsmittelarme und vor allem lösungsmittelfreie, beziehungsweise VOC freie, Haftvermittlerzusammensetzungen.

Wässrige Haftvermittlerzusammensetzungen sind bekannt. Sie weisen jedoch einige Nachteile auf. So beschreibt EP-A-0 577 014 einen wässrigen Primer, welcher ein Aminosilan oder ein Mercaptosilan aufweist. WO 2005/093002 A1 offenbart zweikomponentige Haftvermittlerzusammensetzungen, welche in einer bevorzugten Ausführungsform eine wässrige Haftvermittlerzusammensetzung, welche eine Mischung eines Alkyl-Trialkoxysilans mit einem Aminoalkyl-Trialkoxysilan und/oder Mercaptoalkyl-Trialkoxysilan umfassen, darstellt.

Es hat sich jedoch im Rahmen der vorliegenden Erfindung überraschenderweise gezeigt, dass bei derartigen Mischungen die Haftung auf Glas, insbesondere nach Wasserlagerung, stark verschlechtert wird, sobald der Anteil von Alkylsilan ein gewisses Mass überschreitet.

Ein besonders wichtiges Einsatzgebiet der Haftvermittlerzusammensetzung ist der Fahrzeugbau, insbesondere beim Einglasen, d.h. das Verkleben von Scheiben mit Fahrzeugkarosserien. Die Scheiben der neuesten Generation weisen integrierte Antennen und damit verbunden im Scheibenrandbereich - wo der Klebstoff appliziert wird - Oberflächen aus Silber, Silberbasierenden Zusammensetzungen oder Legierungen auf. Auf diesen Oberflächen weist jedoch ein Grossteil der verwendeten Polyurethanklebstoffe auch unter Benutzung von bekannten Haftvermittlerzusammensetzungen Haftprobleme auf.

### Darstellung der Erfindung

Die Aufgabe der vorliegenden Erfindung ist es daher, wässrige Zusammensetzungen zur Verfügung zu stellen, welche die Nachteile des Standes des Technik überwinden. Überraschenderweise wurde nun gefunden, dass wässrige Haftvermittlerzusammensetzungen gemäss Anspruch 1 diese Aufgabe lösen.

Es hat sich überraschenderweise gezeigt, dass die erfindungsgemässen Haftvermittlerzusammensetzungen bei der Verwendung für feuchtigkeitshärtende einkomponentigen Polyurethanklebstoffen zu guter Haftung auf einer Vielzahl von Untergründen führt. Insbesondere konnte gezeigt werden, dass derartige wässrige Haftvermittlerzusammensetzungen zu guten Haftungen auf Glas, Keramik und Silber, bzw. Silberbasierenden Zusammensetzungen, führt.

Insbesondere wurde gefunden, dass der Einsatz von Mercaptosilanen zu einer starken Verbesserung der Haftung auf Silber, beziehungsweise Silberbasierenden Zusammensetzungen oder Legierungen, führt.

Dies ist insbesondere im Fahrzeugbau für das Einglasen mittels Polyurethanklebstoffen von Scheiben mit integrierter Antenne, die Bereiche von derartigen Oberflächen aufweisen, wichtig.

Es wurde weiterhin gefunden, dass sich sehr lagerstabile erfindungsgemässe Haftvermittlerzusammensetzungen formulieren lassen.

### Wege zur Ausführung der Erfindung

Die vorliegende Erfindung betrifft wässrige Haftvermittterzusammensetzungen, welche mindestens ein Aminosilan der Formel (I) oder mindestens ein Aminosiloxan **AS,** welches aus einer Kondensationsreaktion eines Aminosilans der Formel (I) mit mindestens einem weiteren Silan erhalten wird, sowie mindestens ein Mercaptosilan der Formel (II) umfassen und welche entweder einen Gehalt von 0 bis 45 Gew.-%, insbesondere 0 bis 25 Gew.-%, bezogen auf das Gewicht des Aminosilans oder des Aminosiloxans **AS,** an Alkylsilanen aufweisen oder in welcher das Verhältnis der Anzahl Mole Alkylsilane zur Anzahl Mole Aminosilan oder Aminosiloxan **AS** einen Wert von 0 - 0.60, insbesondere 0 - 0.33 beträgt. 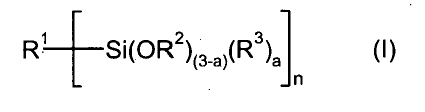 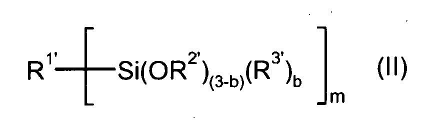 wobei
R¹ für einen n-wertigen organischen Rest mit mindestens einer primären und/oder sekundären Aminogruppe steht,
R^{1'} für einen m-wertigen organischen Rest mit mindestens einer Mercaptogruppe steht,
R² und R^{2'} unabhängig von einander für H oder eine Alkylgruppe mit 1 bis 4 C-Atome oder für eine Acylgruppe steht;
R³ und R^{3'} unabhängig von einander für H oder für eine Alkylgruppe mit 1 bis 10 C-Atome steht;
a und b unabhängig von einander für einen Wert von 0, 1 oder 2 steht; und n und m unabhängig voneinander für die Werte 1, 2, 3 und 4 steht.

Der hier verwendete Term "unabhängig von einander" bedeutet hierbei nicht nur "unabhängig von den anderen Inhaltsstoffen" sondern auch "unabhängig innerhalb desselben Moleküls". So sind beispielsweise auch Hydroxy-Dimethoxy-Aminosilane (R²=Methyl, R²=Methyl, R²=H) möglich.

Im gesamten vorliegenden Dokument bezeichnen die Terme "Organosilane" Silane, welche mindestens einen organischen Rest aufweisen, welcher über eine Si-C-Bindung an das Siliziumatom gebunden ist. Als "Alkylsilane" werden Organosilane bezeichnet, deren organischer Rest eine Kohlenwasserstoffgruppe ist. Diese Alkylsilane weisen keine weiteren über C-Si-Bindungen gebundenen organische Reste mit funktionellen Gruppen mit Heteroatomen, wie Amino- oder Mercaptogruppen, auf. Als "Aminosilane", beziehungsweise "Mercaptosilane" werden Organosilane bezeichnet, deren organischer Rest eine Aminogruppe oder eine Mercaptogruppe aufweist. "Tetraalkoxysilane" stellen demzufolge gemäss dieser Definition keine Organosilane dar. Als "Aminosiloxan" werden Verbindungen bezeichnet, welche mindestens eine Si-O-Si-Bindung aufweisen und mindestens zwei organische Reste aufweisen, welche über eine Si-C-Bindung an die Siliziumatome gebunden sind. Mindestens einer dieser organischen Reste weist dabei eine Aminogruppe auf.

Die Zusammensetzung weist mindestens ein Aminosilan der Formel (I) oder ein Aminosiloxan **AS,** welches aus einer Kondensationsreaktion eines Aminosilans der Formel (I) mit mindestens einem weiteren Silan erhalten wird, auf. Besonders bevorzugt sind Alkoxysilane, d.h. Aminosilane der Formel (I), bei denen R² für eine Alkylgruppe mit 1 bis 4 C-Atome steht. Besonders bevorzugt sind Methoxy- (R² = Methyl) und Ethoxysilane (R² = Ethyl). Als besonders vorteilhaft haben sich Aminosilane mit Trialkoxygruppen (a = 0), insbesondere Trimethoxysilangruppen, erwiesen.

In Gegenwart von Wasser können Alkoxysilane hydrolysieren und es entstehen Silanole, d.h. Silane mit Si-OH Gruppierungen (R² = H). Insbesondere ist es hierbei möglich, dass auch teilhydrolysierte Produkte entstehen. Als Endstufe derartiger Hydrolysereaktionen stehen Silantriole.

Als Aminosilane sind insbesondere Aminosilane geeignet, welche ausgewählt sind aus der Gruppe bestehend aus 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, N-Methyl-3-Aminopropyl-trimethoxysilan, N-Ethyl-3-Aminopropyl-trimethoxysilan, N-Butyl-3-Aminopropyl-trimethoxysilan, N-Cyclohexyl-3-Aminopropyl-trimethoxysilan, N-Phenyl-3-Aminopropyl-trimethoxysilan, N-Methyl-3-Amino-2-methylpropyl-trimethoxysilan, N-Ethyl-3-Amino-2-methylpropyl-trimethoxysilan, N-Ethyl-3-Aminopropyl-dimethoxy-methylsilan, N-Phenyl-4-Aminobutyl-trimethoxysilan, N-Phenyl-aminomethyl-dimethoxymethylsilan, N-Cyclohexyl-aminomethyl-dimethoxymethylsilan, N-Methyl-aminomethyl-dimethoxymethylsilan, N-Ethylaminomethyl-dimethoxymethylsilan, N-Propyl-aminomethyl-dimethoxymethylsilan, N-Butyl-aminomethyl-dimethoxymethylsilan; N-(2-Aminoethyl)-3-aminopropyl-trimethoxysilan, 3-[2-(2-Aminoethylamino)-ethylamino]-propyl-trimethoxysilan, Bis(trimethoxysilylpropyl)amin, sowie deren Analoga mit Ethoxy-oder Isopropoxygruppen anstelle der Methoxygruppen am Silicium.

In einer Ausführungsform ist das Aminosilan der Formel (I) ein Aminosilan der Formel (V) 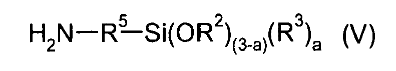 wobei R⁵ für eine lineare oder verzweigte Alkylengruppe mit 1 bis 6 C-Atomen, insbesondere für Propylen, steht. Als besonders bevorzugt gilt hierbei 3-Aminopropyltrimethoxysilan.

In einer bevorzugten Ausführungsform weist das Aminosilan der Formel (I) sekundäre Aminogruppen auf. Insbesondere handelt es sich hierbei um Aminosilane der Formel (VI) oder (VII) oder (VIII). 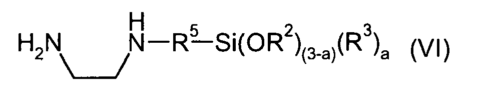 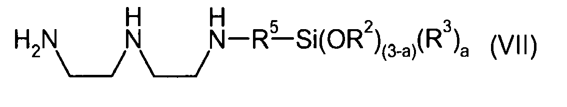 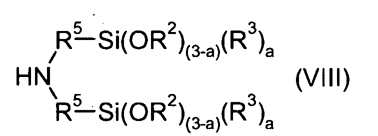 wobei R⁵ für eine lineare oder verzweigte Alkylengruppe mit 1 bis 6 C-Atomen, insbesondere für Propylen, steht. Als besonders bevorzugt gezeigt haben sich N-(2-Aminoethyl)-3-aminopropyl-trimethoxysilan, 3-[2-(2-Aminoethylamino)-ethylamino]-propyl-trimethoxysilan und Bis(trimethoxysilylpropyl)amin.

Es hat sich als besonders vorteilhaft herausgestellt, wenn mehrere Aminosilane der Formel (I) in der Zusammensetzung, vorhanden sind. Vorzugsweise weist mindestens eines der Aminosilane die Formel (VI) auf.

In einer Ausführungsform weist die Zusammensetzung Aminosiloxane **AS** auf. Diese Aminosiloxane werden aus einer Kondensationsreaktion eines Aminosilans der Formel (I) mit mindestens einem weiteren Silan erhalten. Dem Fachmann ist klar, dass die an der Kondensation beteiligten Silane vorzugsweise hydrolysiert oder zumindest teilhydrolysiert sein sollten. Als beteiligte Silane sind insbesondere Alkylsilane bevorzugt. Es entsteht hierbei ein Aminosiloxan, welches neben Aminogruppen zusätzlich Alkylgruppen aufweisen. Der Kondensationsgrad kann unterschiedlich sein. Es können Dimere, Trimere oder Oligomere sein. Die Aminosiloxane **AS** können noch Alkoxysilangruppen aufweisen. Die Aminosiloxane **AS** sind vorzugsweise in Wasser löslich oder mischbar oder lassen sich dispergieren. Derartige Aminosiloxane **AS** sind kommerziell erhältlich zum Beispiel als Dynasylan® HDYROSIL 2627, Dynasylan® HDYROSIL 2776 oder Dynasylan® HDYROSIL 2929 von Degussa AG, Deutschland.

Die Zusammensetzung weist mindestens ein Mercaptosilan der Formel (II) auf. Besonders bevorzugt sind Alkoxysilane, d.h. Mercaptosilane der Formel (II), bei denen R^{2'} für eine Alkylgruppe mit 1 bis 4 C-Atome steht. Besonders bevorzugt sind Methoxy- (R^{2'} =Methyl) und Ethoxysilane (R^{2'} = Ethyl). Als besonders vorteilhaft haben sich Mercaptosilane mit Trialkoxygruppen (b = 0), insbesondere Trimethoxysilangruppen, erwiesen.

In Gegenwart von Wasser können Alkoxysilane hydrolysieren und es entstehen Silanole, d.h. Silane mit Si-OH Gruppierungen (R^{2'} = H). Insbesondere ist es hierbei möglich, dass auch teilhydrolysierte. Produkte entstehen. Als Endstufe derartiger Hydrolysereaktionen stehen Silantriole.

Bevorzugt weist das Mercaptosilan der Formel (II) die Formel (IX) auf. 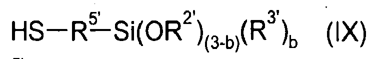 wobei R^{5'} für eine lineare oder verzweigte Alkylengruppe mit 1 bis 6 C-Atomen, insbesondere für Propylen, steht.

Als besonders bevorzugte Mercaptosilane gelten 3-Mercaptopropyl-trimethoxysilan und 3-Mercaptopropyl-triethoxysilan.

Weiterhin weist die wässrige Haftvermittlerzusammensetzung entweder einen Gehalt von 0 bis 45 Gew.-%, insbesondere 0 bis 25 Gew.-%, bezogen auf das Gewicht des Aminosilans oder des Aminosiloxans, an Alkylsilanen auf. Oder das Verhältnis der Anzahl Mole Alkylsilane zu Anzahl Mole Aminosilan oder Aminosiloxan **AS** beträgt in der wässrigen Haftvermittlerzusammensetzungeinen einen Wert von 0 - 0.60, insbesondere 0 - 0.33. Ist der Gehalt an Alkylsilanen grösser, wird die Haftung, insbesondere auf Glas, zunehmend verschlechtert. Bevorzugt ist die wässrige Haftvermittlerzusammensetzung jedoch frei von Alkylsilanen. Derartige Alkylsilan-freie wässrige Haftvermittlerzusammensetzung weisen sowohl gute Haftung auf Glas als auch auf Silber, bzw. Silber-basierenden Zusammensetzungen, auf.

Als Alkylsilane gelten insbesondere Alkylsilane der Formel (III).

R^{1"}-Si(OR^{2"})_{(3-c)}(R^{3"})c (III);

wobei
R^{1"} für eine gesättigte oder ungesättigte Alkylgruppe oder Aryl- oder Aralkylgruppe steht;
R^{2"} unabhängig von einander für H oder eine Alkylgruppe mit 1 bis 4 C-Atome oder für eine Acylgruppe steht;
R^{3"} unabhängig von einander für H oder für eine Alkylgruppe mit 1 bis 10 C-Atome steht;
und c für einen Wert von 0, 1 oder 2 steht;
Es wurde gefunden, dass Alkylsilane die Haftung auf Glas negativ beeinflussen.

Weiterhin ist es bevorzugt, dass die wässrige Haftvermittlerzusammensetzung im Wesentlichen frei, bevorzugt frei, von Organosilanen **OS** ist, deren organische Rest, welcher über eine Si-C-Bindung an das Siliziumatom gebunden ist, mindestens eine funktionelle Gruppe aufweist, welche mit der Aminogruppe des Aminosilans der Formel (I) oder des Aminosiloxans **AS** oder mit der Mercaptogruppe des Mercaptosilans der Formel (II) reagieren kann.

Besonders bevorzugt ist die wässrige Haftvermittlerzusammensetzung im Wesentlichen frei, bevorzugt frei, von Organosilanen ist, deren organischer Rest, welcher über eine Si-C-Bindung an das Siliziumatom gebunden ist, Hydroxylgruppen aufweist.

Unter "im Wesentlichen frei" wird hier ein Gehalt von weniger als 3 Gew.-%, insbesondere von weniger als 1 Gew.-%, bezogen auf das Gewicht der wässrigen Zusammensetzung, verstanden.

Als besonders vorteilhaft hat es sich jedoch erwiesen, dass die wässrige Haftvermittlerzusammensetzung zusätzlich mindestens ein Tetraalkoxysilan der Formel (IV) aufweist

Si(OR⁴)₄ (IV)

wobei R⁴ unabhängig von einander für H oder eine Alkylgruppe mit 1 bis 4 C-Atome oder für eine Acylgruppe,insbesondere Acetylgruppe,steht. Derartige Tetraalkoxysilane sind beispielsweise Tetramethoxysilan, Tetraethoxysilan, Tetraisopropoxysilan, Tetrapropoxysilan, Tetrabutoxysilan und Tetraacetoxysilan. Als besonders bevorzugt hat sich Tetraethoxysilan erwiesen.

Die wässrige Zusammensetzung kann weitere Bestandteile umfassen. Derartige zusätzliche Bestandteile sind Tenside, Säuren, Katalysatoren, Cosolvents, Biozide, Antiabsetzmittel, Stabilisatoren, Inhibitoren, Pigmente, Farbstoffe, Korrosionsschutzmittel, Geruchsstoffe, UV-Indikatoren, Thixotropiermittel, Füllstoffe, Entschäumer, weitere Organosilane, Titanate und dergleichen.

Als Cosolvents werden mit Wasser mischbare Lösungsmittel, wie beispielsweise Alkohole oder Ether oder Ketone, verstanden. Es ist jedoch bevorzugt, dass derartige Lösungsmittel lediglich in einer kleinen Menge, d.h. typischerweise weniger als 10 Gew.-% bezogen auf das Wasser, verwendet werden. Besonders bevorzugt ist die Zusammensetzung -abgesehen von Spuren von Alkoholen, welche sich aus der Hydrolyse der in der wässrigen Zusammensetzung eingesetzten Alkoxysilanen ergeben- frei von derartigen Cosolvents. Wird ein grösserer Gehalt an Lösungsmittel eingesetzt, verstärkt sich die VOC-Problematik wiederum, deren Vermeidung ja mit ein Hauptgrund für den Einsatz von wässrigen Zusammensetzungen darstellt.

Tenside sind bevorzugte zusätzliche Bestandteile der wässrigen Zusammensetzung.

Als Tenside können natürliche oder synthetische Stoffe verwendet werden, welche in Lösungen die Oberflächenspannung des Wassers oder anderer Flüssigkeiten herabsetzen. Als Tenside, auch Netzmittel genannt, können anionische, kationische, nichtionische oder ampholytische Tenside oder deren Mischungen verwendet werden.

Beispiele für anionische Tenside sind Carboxylat-, Sulfat-, Phosphatoder Sulfonat-Gruppen aufweisende Tenside, wie zum Beispiel Aminosäurederivate, Fettalkoholethersulfate, Fettalkoholsulfate, Seifen, Alkylphenolethoxylate, Fettalkoholethoxylate, aber auch Alkansulfonate, Olefinsulfonate oder Alkylphosphate.

Zu den nichtionischen Tensiden, den sogenannten Niotensiden, gehören beispielsweise Ethoxylate, wie zum Beispiel ethoxylierte Additionsprodukte von Alkoholen, wie beispielsweise Polyoxyalkylenpolyole, Amine, Fettsäuren, Fettsäureamide, Alkylphenole, Ethanolamide, Fettamine, Polysiloxane oder Fettsäureester, aber auch Alkyl- oder Alkylphenyl-polyglykolether, wie zum Beispiel Fettalkoholpolyglykolether, oder Fettsäureamide, Alkylglykoside, Zuckerester, Sorbitanester, Polysorbate oder Trialkylaminoxide, aber auch Ester und Amide aus Poly(meth)acrylsäuren mit Polyalkylenglykolen oder Aminopolyalkylenglykole, die allenfalls einseitig mit Alkylgruppen abgeschlossen sein können.

Beispiele für kationische Tenside sind quaternäre Ammonium- oder Phosphoniumverbindungen, wie zum Beispiel Tetraalkylammoniumsalze, N-,N-dialkylimidazolinverbindungen, Dimethyldistearyl-ammoniumverbindungen, oder N-Alkylpyridinverbindungen, insbesondere Ammoniumchloride.

Zu den ampholytischen oder amphoterischen Tensiden gehören amphotere Elektrolyte, sogenannte Ampholyte, wie zum Beispiel Aminocarbonsäuren, und Betaine.

Derartige Tenside sind kommerziell breit erhältlich.

Besonders geeignet sind alkoxylierte Alkohole. Insbesondere als geeignet gezeigt haben sich alkoxylierte nichtionische Fluorotenside, insbesondere Zonyl® FSO-100, welches bei ABCR, Deutschland kommerziell erhältlich ist, alkoxylierte Alkohole oder alkoxylierte Alkylphenole, insbesondere Antarox FM 33, welches kommerziell bei Rhodia kommerziell erhältlich ist.

Weiterhin sind sehr bevorzugt alkoxylierte Fettalkohole, insbesondere jener wie er als Hydropalat® 120 von Cognis kommerzialisiert wird.

Säuren sind ebenfalls bevorzugte zusätzliche Bestandteile der wässrigen Zusammensetzung. Die Säure kann organisch oder anorganisch sein. Organische Säuren sind einerseits Carbonsäuren, insbesondere eine Carbonsäure, welche ausgewählt ist aus der Gruppe umfassend Ameisen-, Essig-, Propion-, Trifluoressig-, Oxal-, Malon-, Bernstein-, Malein-, Fumar- und Zitronensäure sowie Aminosäuren, insbesondere Asparginsäure und Glutaminsäure. Bevorzugt sind Säuren die einen pKₐ zwischen 4.0 und 5 aufweisen. Unter "pKₐ" versteht der Chemiker bekannterweise den negativen dekadischen Logarithmus der Säuredissoziationskonstante Kₐ: pKₐ = -log₁₀Kₐ.

Als Carbonsäure ist Essigsäure bevorzugt.

Organische Säuren sind anderseits insbesondere solche die einen Schwefelatom oder ein Phosphoratom enthalten. Derartige organische Säuren sind insbesondere organische Sulfonsäuren. Unter organischer Sulfonsäure werden Verbindungen verstanden, welche einen Kohlenstoff-Atome aufweisenden organischen Rest sowie mindestens eine funktionelle Gruppe -SO₃H aufweisen.

Die aromatische Sulfonsäure kann ein- oder mehrkernig sein und es können eine oder mehrere Sulfonsäure-Gruppen vorhanden sein. Beispielswiese können dies 1- oder 2-Napthalinsulfonsäure, 1,5-Napthalindisulfonsäure, Benzolsulfonsäure oder Alkylbenzolsulfonsäuren sein.

Bevorzugte aromatische Säuren sind diejenigen, welche die Formel (X) aufweisen

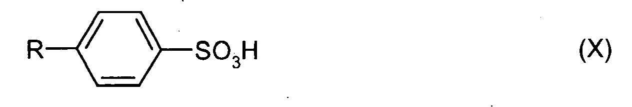

R steht hierbei für einen Alkylrest mit 1 bis 18 Atomen. Bevorzugt steht R für eine Methyl- oder Dodecyl-Gruppe, insbesondere für eine Dodecyl-Gruppe.

Die Säure kann weiterhin eine anorganische Säure sein. als anorganische Säuren haben sich insbesondere solche als geeignet gezeigt, welche ein Schwefelatom oder ein Phosphoratom aufweisen.

Als Phosphoratome aufweisende Säuren gelten insbesondere Phosphorsäure, Phosporige Säure, Phosponsäure, Phosphonige Säure.

Als Schwefelatome aufweisende Säuren gelten insbesondere Schwefelsäuren, insbesondere Schwefelsäure, schweflige Säuren, Perschwefelsäure, Dischwefelsäure (=Pyroschwefelsäure), Dischwefelige Säure, Dithionsäure, Dithionige Säure, Thioschwefelsäure oder Thioschweflige Säure.

In einer bevorzugten Ausführungsform besteht die wässrige Haftvermittlerzusammensetzung aus Wasser, mindestens einem Aminosilan der Formel (I), mindestens einem Mercaptosilan der Formel (II), gegebenenfalls mindestens einem Tetraalkoxysilan, sowie der daraus möglichen Hydrolyse- und / oder Kondensationsprodukte.

In einer weiteren bevorzugten Ausführungsform besteht die wässrige Haftvermittlerzusammensetzung aus Wasser, mindestens einem Aminosilan der Formel (I), mindestens einem Mercaptosilan der Formel (II), mindestens einem Tensid, mindestens einer Säure, gegebenenfalls mindestens einem Tetraalkoxysilan, sowie der daraus möglichen Hydrolyse- und / oder Kondensationsprodukte.

In einer weiteren bevorzugten Ausführungsform besteht die wässrige Haftvermittlerzusammensetzung aus Wasser, mindestens einem Aminosilan der Formel (I), mindestens einem Mercaptosilan der Formel (II) und gegebenenfalls einem Tensid und einer Säure, insbesondere einer organischen Säure, sowie der daraus möglichen Hydrolyse- und / oder Kondensationsprodukte.

In der wässrigen Haftvermittlerzusammensetzung beträgt der Gewichtsanteil der Summe von Aminosilan der Formel (I), Aminosiloxan **AS,** Mercaptosilan der Formel (II) und Wasser sowie, falls vorhanden, Tetraalkoxysilan der Formel (IV) vorteilhaft von mehr als 80 Gew.-%, insbesondere mehr als 90 Gew.-%, am Gewicht der wässrigen Haftvermittlerzusammensetzung.

Der Gewichtsanteil der Summe von Aminosilan der Formel (1), Aminosiloxan **AS,** Mercaptosilan der Formel (II) und - falls vorhanden - Tetraalkoxysilan der Formel (IV) beträgt vorteilhaft mehr als 0.1 Gew.-%, insbesondere zwischen 0.1 und 10 Gew.-%, bevorzugt zwischen 0.1 und 5 Gew. -%, meist bevorzugt zwischen 0.5 bis 2 Gew.-%, am Gewicht der wässrigen Haftvermittlerzusammensetzung.

Das Gewichtsverhältnis der Summe von Aminosilan der Formel (I) und Aminosiloxan **AS** zu Mercaptosilan der Formel (II) beträgt vorteilhaft 1:10 bis 10:1, insbesondere 1:2 bis 2:1, bevorzugt 1:1.5 bis 1.5: 1.

Die wässrige Haftvermittlerzusammensetzung liegt vorzugsweise als zweikomponentige Zusammensetzung bestehend aus einer ersten Komponente **K1** und einer zweiten Komponente **K2** vor. Hierbei ist es vorteilhaft wenn die erste Komponente **K1** mindestens das Aminosilan der Formel (I) oder mindestens das Aminosiloxan **AS** und das Mercaptosilan der Formel (II) und - falls vorhanden - das Tetraalkoxysilan der Formel (IV) umfasst, während die zweite Komponente **K2** mindestens Wasser umfasst.

Falls die Zusammensetzung ein Tensid und/oder eine Säure umfasst, kann es und/oder sie ein Bestandteil der ersten Komponente **K1** und/oder der zweiten Komponente **K2** sein. Vorteilhaft ist es jedoch, dass das Tensid ein Bestandteil der zweiten Komponente **K2** ist. Weiterhin vorteilhaft ist es dass die Säure ein Bestandteil der zweiten Komponente **K2** ist.

Ein weiterer Aspekt der vorliegenden Erfindung stellt eine Packung dar. Die Packung besteht aus einer Verpackung mit zwei Kammern, welche durch mindestens eine Trennwand voneinander getrennten Kammern aufweist und einer wässrigen zweikomponentigen Haftvermittlerzusammensetzung, wie sie vorgängig beschrieben wurde auf. Deren erste Komponente **K1** ist in der ersten Kammer und die zweite Komponente **K2** in der zweiten Kammer vorhanden.

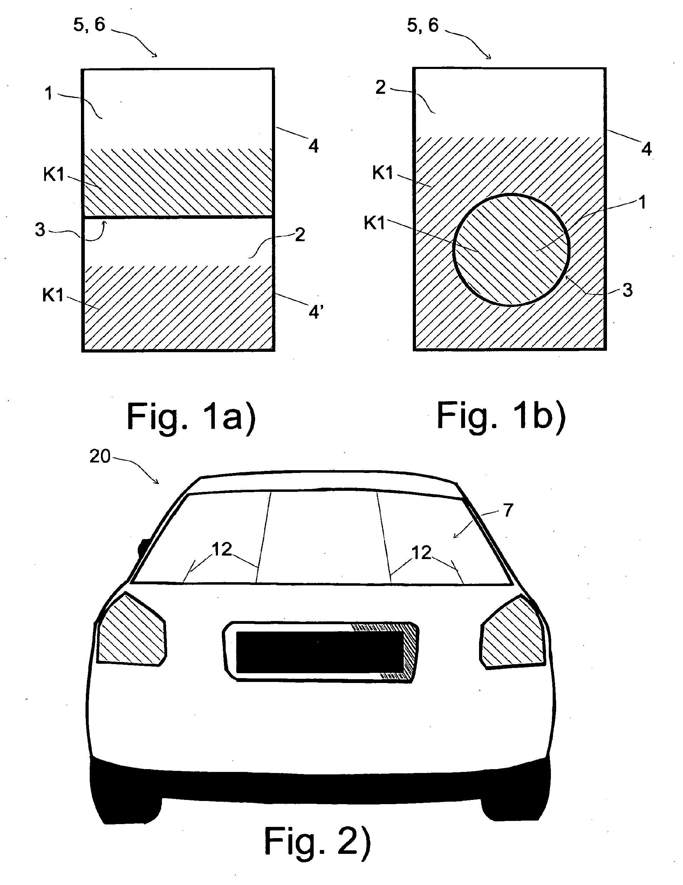

Figuren 1a) und 1b) stellen schematisch Querschnitte durch zwei Ausführungsformen dar. Die Packung 6 besteht aus einer Verpackung 5, welche zwei durch mindestens eine Trennwand 3 voneinander getrennten Kammern 1,2 aufweist; und der zweikomponentigen Zusammensetzung, deren ersten Komponente K1 in der ersten Kammer 1 und deren zweiten Komponenten K2 in der zweiten Kammer 2 vorliegen.

In Figur 1a) ist eine Ausführungsform gezeigt, in welcher die Trennwand 3 sich zwischen den zwei Aussenwänden 4,4' der ersten und zweiten Kammer 1,2 erstreckt.

Figur 1b) zeigt eine Ausführungsform, in welcher die erste Kammer 1 innerhalb der zweiten Kammer 2 angeordnet ist und somit die erste Kammer 1 vollständig von der zweiten Kammer umgeben ist und die erste Kammer 1 vollständig von der Trennwand 3 begrenzt ist.

Derartige Packungen eigenen sich sehr gut zum Lagern der zweikomponentigen Haftvermittlerzusammensetzungen. Bei Bedarf können vor der Applikation die zwei Komponenten gemischt werden. Falls die Trennwand 3 aus einem Material gefertigt ist, welches durch Aufbringung von Druck bricht oder einreisst, kann das Mischen durch ein Aufbringen eines Druckes auf die Aussenwände 4,4' erfolgen, wodurch die Trennwand 3 zum Brechen oder Bersten gebracht werden kann. Das Aufbringen des Druckes erfolgt typischerweise durch Krafteinwirkung. Diese Krafteinwirkung ist bevorzugt eine Schlageinwirkung oder Verbiegen der Verpackung. Das Material der Trennwand 3 ist typischerweise aus Glas, Aluminium, einer Aluminiumlegierung, aus einem dünnen Kunststoff oder einem Verbundmaterial gefertigt. Die Trennwand 3 muss in einer Dicke gefertigt sein, dass sie nicht bereits durch eine unbeabsichtigte Krafteinwirkung, wie sie beispielsweise üblicherweise bei Transporten vorkommen, bricht. Die Aussenwand 4,4' muss derart gestaltet sein, dass sie bei der Aufbringung des Druckes, der zum Brechen der Trennwand 3 führt, nicht bricht oder einreisst. Die Aussenwand 4,4' ist entweder aus einem Metall oder einem elastischen Kunststoff gefertigt. Das Vermischen der zwei Komponenten kann durch Schütteln unterstützt werden. Die gemischten Komponenten können durch eine Auslassöffnung in der Aussenwand der Verpackung (nicht dargestellt in Figuren 1a, 1b) aus entnommen werden und/oder appliziert werden.

Weitere geeignete Ausführungsformen sind diejenigen, wie sie in WO 2005/093002 A1, insbesondere durch die Figuren 1 bis 11, beschrieben sind. Die Verpackungen der WO 2005/093002 sind durch eine Inkorporierung über Referenz (incorporation by reference) integrierter Bestandteil des vorliegenden Dokumentes und können mit der vorgängig im Detail beschriebenen wässrigen Haftvermittlerzusammensetzung gefüllt werden und so erfindungsgemässe Packungen bilden.

Die beschriebene wässrige Haftvermittlerzusammensetzung eignet sich insbesondere als Primer, vorzugsweise als Primer für Kleb- und Dichtstoffe. Durch die Verwendung eines derartigen Primers wird die Haftung verbessert.

Somit umfasst die Erfindung auch ein Verfahren zur Verklebung oder zum Abdichten. Von diesem Verfahren sind insbesondere die folgenden drei varianten bevorzugt.

In der ersten Variante umfasst es die Schritte
i) Applikation einer beschriebenen wässrigen Haftvermittlerzusammensetzung auf ein zu verklebendes oder abzudichtendes Substrat **S1**
ii) Applikation eines Klebstoffes oder Dichtstoffes auf die abgelüftete Zusammensetzung, welche sich auf dem Substrat **S1** befindet
iii) Kontaktieren des Klebstoffs oder Dichtstoffes mit einem zweiten Substrat **S2.**

In der zweiten Variante umfasst es die Schritte
i') Applikation einer beschriebenen wässrigen Haftvermittlerzusammensetzung auf ein zu verklebendes oder abzudichtendes Substrat **S1**
ii') Applikation eines Klebstoffes oder Dichtstoffes auf die Oberfläche eines zweiten Substrates **S2**
iii') Kontaktieren des Klebstoffes oder Dichtstoffes mit der abgelüfteten Zusammensetzung, welche sich auf dem Substrat **S1** befindet.

In der dritten Variante umfasst es die Schritte
i") Applikation einer beschriebenen wässrigen Haftvermittlerzusammensetzung auf ein zu verklebendes oder abzudichtendes Substrat **S1**
ii") Ablüften der Zusammensetzung
iii") Applikation eines Klebstoffes oder Dichtstoffes zwischen die Oberflächen des Substrates **S1** und **S2,**

In allen drei Varianten besteht das zweite Substrat **S2** aus demselben oder unterschiedlichem Material wie das Substrat **S1.**

Typischerweise schliesst sich anschliessend an den Schritt iii), iii') oder iii") ein Schritt iv) des Aushärtens des Kleb- oder Dichtstoffes an.

Als Klebstoff kann grundsätzlich jeder Klebstoff verwendet werden. Die vorteilhaften Haftverbesserungen haben sich jedoch insbesondere bei Kleboder Dichtstoffen gezeigt, in welchen dieser ein Polyurethanklebstoff ist, welcher isocyanatgruppen aufweisende Polyurethanprepolymere enthält. Derartige Polyurethanklebstoffe sind kommerziell breit erhältlich insbesondere unter dem Namen Sikaflex® von Sika Schweiz AG.

Das Substrat **S1** und/oder **S2** können vielfältiger Art sein. Bevorzugt ist mindestens eines der Substrates **S1** oder **S2** Glas oder Glaskeramik oder Aluminium oder eine Aluminiumlegierung.

Weiterhin bevorzugt ist mindestens eines der Substrates **S1** oder **S2** Silber insbesondere ein Silberaufdruck auf Glas oder Glaskeramik.

Es hat sich gezeigt, dass Glas und Keramik im Vergleich zu Silberaufdruck weniger sensitiv auf die Haftvermittlerzusammensetzungen reagieren. Deshalb ist es von Vorteil, geringere Silankonzentrationen auf Glas und Keramik zu verwenden, um Unterschiede in den einzelnen wässrigen Haftvermittlerzusammensetzungen untereinander festzustellen.

Die Substrate können bei Bedarf vor dem Applizieren des Dicht- oder Klebstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Besonders geeignet ist das Verfahren zum Verkleben von Scheiben. Deshalb ist in einer bevorzugten Ausführungsform das Substrat **S1,** respektive **S2,** Glas oder Glaskeramik und das Substrat **S2,** respektive **S1,** ein Lack oder ein lackiertes Metall oder eine lackierte Metalllegierung.

Es hat sich insbesondere gezeigt, dass Mercaptosilane zu einer starken Haftverbesserung von einkomponentigen Polyurethanklebstoffen auf Silber oder auf Silber-basierenden Zusammensetzungen oder Legierungen, führen. Besonders gute Haftverbesserung erfolgt auf Silber.

Aufgrund dieses Verfahrens entstehen verklebte Artikel. Derartige Artikel stellen vorzugsweise ein Transportmittel, insbesondere ein Automobil, Bus, Lastkraftwagen, Schienenfahrzeug, ein Schiff oder ein Luftfahrzeug dar.

Es hat sich gezeigt, dass das beschriebene Verfahren insbesondere gut geeignet ist zum Verkleben von Scheiben mit integrierter Antenne. Derartige Antennenanschlusskontakte sind typischerweise aus Silber oder Silberbasierenden Zusammensetzungen oder Legierungen, insbesondere in Form von Silberaufdrucken, auf der Scheibe vorhanden. Typischerweise weisen Teile des Randbereiches der Scheibe - wo der Klebstoff appliziert wird - derartige Oberflächen auf. Es ist somit wichtig, dass der Klebstoff neben Glas und Glaskeramik auch gute Haftung auf Silber, Silberbasierenden Zusammensetzungen beziehungsweise Legierungen aufweist. Figur 2 stellt schematisch eine Heckansicht eines Automobiles 20 mit einer Scheibe 7 neuerer Generation mit integrierter Antenne 12 dar.

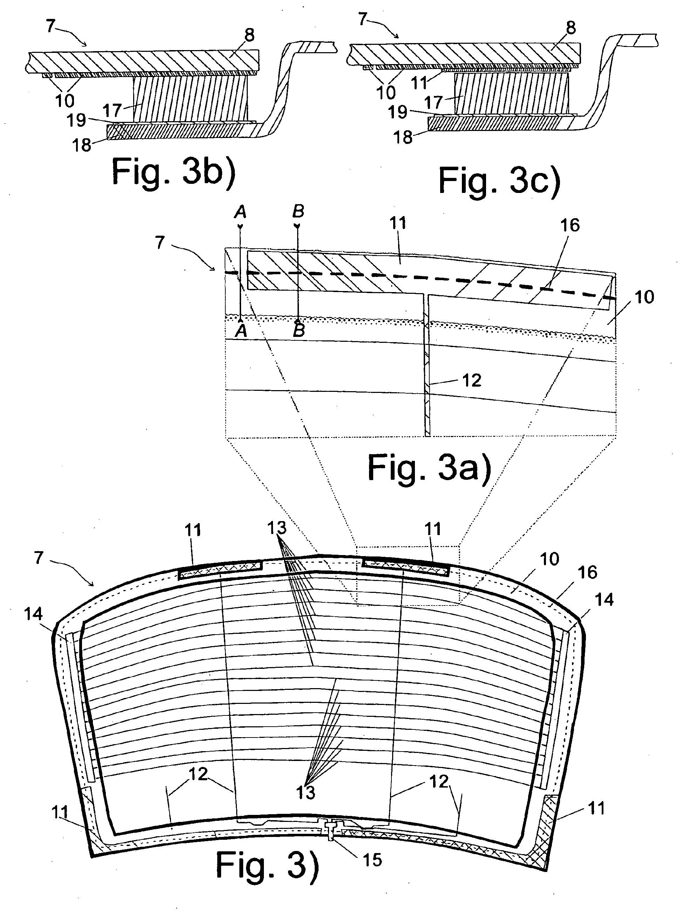

Figur 3 stellt schematisch eine derartige Scheibe 7 mit integrierter Antenne 12 dar. Der Silberaufdruck für die Antenne 11 befindet sich an verschiedenen Orten auf der Glaskeramik 10 im Randbereich der Scheibe 7. Die Antennen 12 werden nach dem Einbau über die Silberaufdrucke 11 für die Antenne mit einem Antennenanschlussstück 15 mit dem Sende- oder Empfangsgerät (nicht gezeigt) im Innern des Fahrzeugs 20 verbunden. Zusätzlich sind auf der Glaskeramik 10 noch Metallaufdrucke 14 für die Verbindung mit der Scheibenheizung 13 vorhanden.

Figur 3a stellt eine Vergrösserung eines Randbereiches der Scheibe 7 mit einem derartigen Silberaufdruck 11, welcher mit der Antennen 12 verbunden ist, und welche vom Rand ins Innere der Scheibe hin angeordnet ist, um einen guten Empfang und/oder Abstrahlung zu gewährleisten. Die Scheibe 7 weist einen Glaskeramikaufdruck 10 im Randbereich der Scheibe auf. Der Polyurethanklebstoff 17 wird im Randbereich entlang der Klebelinie 16 aufgetragen.

Figur 3b, beziehungsweise Figur 3c, stellen einen Querschnitt durch eine eingebaute Scheibe 7 entlang des Querschnitts A-A, beziehungsweise entlang des Querschnitts B-B, in Figur 3a dar. Auf dem Glas 8 befindet sich die Glaskeramik 10. In Figur 3b ist der Polyurethanklebstoff 17 direkt mit der Glaskeramik 10. In Figur 3c klebt der Polyurethanklebstoff 17 auf dem Silberaufdruck 11 für die Antenne. Der Klebstoff 17 ist auf der anderen Seite mit dem Flansch 18 des Automobiles 20 verbunden. Der Flansch 18 ist mit einem Automobillack lackiert. Zur Gewährleistung der Haftung ist in der gezeigten Ausführungsform ein Primer 19 auf dem Lack appliziert, so dass zwischen lackiertem Flansch 18 und Klebstoff 17 eine Primerschicht 19 vorhanden ist.

### Bezugszeichenliste

- 1: erste Kammer
- 2: zweite Kammer
- 3: Trennwand
- 4,4': Aussenwände
- 5: Verpackung
- 6: Packung
- K1: erste Komponente
- K2: zweite Komponente
- 7: Scheibe
- 8: Glas
- 9: Primer
- 10: Glaskeramik
- 11: Silberaufdruck für Antenne
- 12: Antenne
- 13: Scheibenheizung
- 14: Metallaufdruck für Heizungsverbindung
- 15: Antennenanschlussstück
- 16: Klebstoffauftragslinie
- 17: Polyurethanklebstoff
- 18: Flansch
- 19: Primer
- 20: Automobil

### Beispiele

Es wurden unterschiedliche Komponenten **K1** bestehend aus den Silanen gemäss den Angaben (Gewichtsteile) der Tabelle 1 hergestellt. Die Komponenten ***1* bis *9*** entsprechen hierbei erfindungsgemässen Komponenten **K1,** während die Komponenten **R1** bis **R10** Vergleichskomponenten darstellen.

### Verwendete Rohstoffe:

- "A1120": N-(2-Aminoethyl)-3-aminopropyl-trimethoxysilan Silquest® A1120, GE Silicones, Schweiz
- "A1170": Bis(trimethoxysilylpropyl)amin . Silquest® A1170, GE Silicones, Schweiz
- "A1110": 3-Aminopropyl-trimethoxysilan Silquest® A1110, GE Silicones, Schweiz
- "A189": 3-Mercaptopropyl-trimethoxysilan Silquest® A189, GE Silicones, Schweiz
- "TEOS": Tetraethoxysilan Fluka Chemie AG, Schweiz
- "A171": Vinyltrimethoxysilan Silquest® A171, GE Silicones, Schweiz
- "MTMS": Methyltrimethoxysilan Fluka Chemie AG, Schweiz Hydropalat® 120, Cognis, Deutschland
- "HS 2627": Dynasylan® HYDROSIL 2627, Degussa Deutschland Aminosiloxan, aminomodifiziertes Alkylpolysiloxan

**Tabelle 1. Zusammensetzungen von unterschiedlichen Komponenten K1.**

| ***K1:*** | ***R1*** | ***R2*** | ***R3*** | ***R4*** | ***R5*** | ***1*** | ***2*** | ***3*** | ***4*** | ***5*** | ***6*** | **7** | ***8*** | ***9*** | ***R6*** | ***R7*** | ***R8*** | ***R9*** | ***R10*** |
|---|---|---|---|---|---|---|---|---|---|---|---|---|---|---|---|---|---|---|---|
| *A1120* | 1 | 1 | | | 1 | 1 | | | 1 | | 1 | 1 | 1 | | 1 | 1 | | 1 | |
| *A1170* | | | 1 | | | | 1 | | | 1 | | | | | | | | | |
| *A1110* | | | | | | | | 1 | | | | | | | | | 1 | | |
| *HS2627* | | | | | | | | | | | | | | 1 | | | | | 1 |
| *A189* | | | | 1 | | 1 | 1 | 1 | 1 | 1 | 1 | 1 | 1 | 1 | 1 | 1 | 1 | | |
| *TEOS* | | 1 | | | | | | | 1 | 1 | | | | | | | | | |
| *A171* | | | | | | | | | | | | | | | | | | 1 | |
| *MTMS* | | | | | 1 | | | | | | 0.1 | 0.2 | 0.4 | | 0.5 | 1 | 0.5 | | |

Aus diesen unterschiedlichen ersten Komponenten **K1** wurden nun durch Vermischen einer zweiten Komponente **K2** wässrige Haftvermittlerzusammensetzungen hergestellt.

Als Substratuntergrund wurden verwendet
- Floatglass (Zinnseite für Haftungsprüfung verwendet), Rocholl, Deutschland
- ESG Keramik, Ferro 14251, Rocholl, Deutschland
- Silberaufdruck:Silberaufdruckbereiche auf original BMW-Heckscheibe 3er Serie (Serienstand Juli /2006)

Es wurde hierfür für Glas und Keramik als Substratuntergrund 0.5 Gew.-% der jeweiligen Komponente **K1** mit 99.5 % einer Komponente **K2-1** bestehend aus 0.5 Gewichtsteilen Hydropalat® 120, 1 Gewichtsteil Essigsäure (100%) und 98 Gewichtsteilen Wasser vermischt.

Für Silberaufdruck als Substratuntergrund wurde 1.5 Gew.-% der jeweiligen Komponente **K1** mit 98.5 % einer Komponente **K2-2** bestehend aus 0.5 Gewichtsteilen Hydropalat® 120, 1 Gewichtsteil Essigsäure (100%) und 97 Gewichtsteilen Wasser vermischt.

Die derart hergestellten wässrigen Haftvermittlerzusammensetzungen wurden mittels eines damit getränktem Zellulosetuches (Tela®, Tela-Kimberly Switzerland GmbH) auf das jeweilige Substrat aufgetragen, während 10 Minuten abgelüftet und eine Dreiecksraupe von Sikaflex®-250 DM-2 (,,DM-2"), beziehungsweise Sikaflex®-250 PC-T ("PC-T"), bei 23°C und 50% rel. Luftfeuchtigkeit mittels Auspresskartusche und Düse aufgetragen. Beides sind einkomponentige feuchtigkeitshärtende Polyurethanklebstoffe, welche Polyurethanprepolymere mit Isocyanatgruppen enthalten und sind kommerziell erhältlich bei Sika Schweiz AG.

Der Klebstoff wurde nach einer Aushärtezeit von 6 Tagen Klimaraumlagerung (,KL') (23°C, 50% rel. Luftfeuchtigkeit), sowie nach einer anschliessenden Wasserlagerung (,WL') in Wasser bei 23°C während 6 Tagen, sowie nach einer anschliessend Kataplasma-Lagerung (,CP') von 6 Tagen bei 70°C, 100 % rel. Luftfeuchtigkeit, getestet.

Die Haftung des Klebstoffes wurde mittels 'Raupentest' getestet. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebstoff (Kohäsionsbruch). Die Bewertung der Hafteigenschaften erfolgt durch visuelle Bestimmung des kohäsiven Anteils der Haftfläche:

Je höher der Anteil an kohäsivem Bruch ist, umso besser wird die Verklebung eingeschätzt. Testresultate mit Kohäsionsbrüchen von weniger als 50 %, insbesondere weniger als 40 %, gelten typischerweise als ungenügend.

**Tabelle 2. Haftresultate von DM-2 auf Floatglass von verschiedenen wässrigen Zusammensetzungen bestehend aus der Komponente K2-1 und unterschiedlichen Komponenten K1.**

| ***K1:*** | ***R1*** | ***R2*** | ***R3*** | ***R4*** | ***R5*** | ***R6*** | ***R7*** | ***R8*** | ***R9*** | ***R10*** |
|---|---|---|---|---|---|---|---|---|---|---|
| KL | 100 | 90 | 100 | 70 | 50 | 80 | 100 | 80 | 100 | 100 |
| WL | 5 | 50 | 75 | 20 | 20 | 30 | 30 | 50 | 70 | 20 |
| CP | 100 | 70 | 75 | 5 | 30 | 100 | 100 | 70 | 100 | 20 |
| | | | | | | | | | | |

| ***K1:*** | ***1*** | ***2*** | ***3*** | ***4*** | ***5*** | ***6*** | ***7*** | ***8*** | ***9*** | |
|---|---|---|---|---|---|---|---|---|---|---|
| KL | 100 | 100 | 100 | 100 | 100 | 100 | 100 | 95 | 100 | |
| WL | 100 | 100 | 100 | 100 | 100 | 100 | 95 | 40 | 100 | |
| CP | 100 | 100 | 100 | 100 | 100 | 100 | 100 | 100 | 90 | |

**Tabelle 3. Haftresultate von DM-2 auf ESG Keramik von verschiedenen wässrigen Zusammensetzungen bestehend aus der Komponente K2-1 und unterschiedlichen Komponenten K1.**

| ***K1:*** | ***R1*** | ***R2*** | ***R3*** | ***R4*** | ***R5*** | ***R10*** | ***1*** | ***2*** | ***3*** | ***4*** | ***5*** | ***6*** | ***9*** |
|---|---|---|---|---|---|---|---|---|---|---|---|---|---|
| KL | 100 | 100 | 10 | 0 | 5 | 100 | 100 | 100 | 100 | 100 | 100 | 100 | 100 |
| WL | 100 | 100 | 0 | 0 | 0 | 30 | 100 | 100 | 100 | 100 | 100 | 100 | 100 |
| CP | 100 | 100 | 10 | 0 | 0 | 10 | 100 | 100 | 100 | 100 | 100 | 100 | 60 |

**Tabelle 4. Haftresultate von PC-T auf Silberbeschichtung von verschiedenen wässrigen Zusammensetzungen bestehend aus der Komponente K2-2 und unterschiedlichen Komponenten K1.**

| ***K1:*** | ***R1*** | ***R2*** | ***R3*** | ***R10*** | ***1*** | ***2*** | ***4*** | ***5*** | ***9*** |
|---|---|---|---|---|---|---|---|---|---|
| KL | 0 | 5 | 0 | 100 | 100 | 100 | 100 | 50 | 100 |
| WL | 0 | 0 | 0 | 0 | 80 | 90 | 80 | 50 | 100 |
| CP | 0 | 0 | 0 | 0 | 60 | 50 | 70 | 60 | 20 |

**Tabelle 5. Haftresultate von DM-2 auf Silberbeschichtung von verschiedenen wässrigen Zusammensetzungen bestehend aus der Komponente K2-2 und unterschiedlichen Komponenten K1.**

| ***K1:*** | ***R1*** | ***R2*** | ***R3*** | ***R4*** | ***R10*** | ***1*** | ***2*** | ***3*** | ***4*** | ***9*** |
|---|---|---|---|---|---|---|---|---|---|---|
| KL | 0 | 5 | 0 | 0 | 0 | 100 | 80 | 50 | 100 | 100 |
| WL | 0 | 0 | 0 | 0 | 0 | 100 | 50 | 30 | 100 | 30 |
| CP | 0 | 0 | 0 | 0 | 0 | 0 | 0 | 0 | 0 | 30 |

Die Haftergebnisse der Tabellen 2 bis 5 zeigen, dass mit den erfindungsgemässen Zusammensetzung gleichzeitig auf Glas, Silberaufdruck und Keramik eine gute Haftung erreicht werden kann, während bei den Vergleichsbeispielen zumindest bei einem dieser Untergründen Schwächen auftreten.

Für Tabelle 6 wurden wässrige Zusammensetzungen hergestellt, welche aus 2 Gew.-% Silan, bzw. 2 Gew.-% Silanmischung, die aus den jeweiligen Silanen in den angegebenen Gewichtsteilen gemischt wurde, 0.5 Gew.-% Hydropalat® 120, 1 Gew.-% Essigsäure (100%) und 96.5 Gew.-% Wasser besteht.

Von diesen wässrigen Haftvermittlerzusammensetzungen wurde die Lagerstabilität untersucht, indem die wässrige Zusammensetzung nach unterschiedlichen Anzahl Tagen der Lagerung bei Raumtemperatur visuell beurteilt wurde.

War die Zusammensetzung klar, wurde sie mit einem "i.O." bewertet und als gut bewertet. Trat eine leichte Trübung auf wurde sie mit einem "LT." bewertet. War eine starke Trübung vorhanden, d.h. hatte milchigen Aspekt, wurde sie mit einem "T" bewertet. Beim Auftreten von Ausfällungen wurde mit "A" bewertet. Die Bewertungen "T" und insbesondere "A" sind ungenügend. Derartige Zusammensetzungen sind praktisch nicht mehr brauchbar als Haftvermittlerzusammensetzung.

**Tabelle 6 Stabilität von wässrigen Haftvermittlerzusammensetzungen.**

| | | | Lagerzeit [d] | | | | | |
|---|---|---|---|---|---|---|---|---|
| | *A1120* | *A189* | 0 | 1 | 7 | 14 | 21 | 28 |
| ***R11*** | 1 | 0 | i.O. | i.O. | i.O. | i.O. | i.O. | i.O. |
| ***R12*** | 0 | 1 | i.O. | i.O. | A | A | A | A |
| ***10*** | 1 | 10 | i.O. | i.O. | I.T. | A | A | A |
| ***11*** | 1 | 5 | i.O | i.O. | i.O. | T | T | A |
| ***12*** | 1 | 2 | i.O. | i.O. | i.O. | I.T. | T | A |
| ***13*** | 1 | 1 | i.O. | i.O. | i.O. | I.T. | T | A |
| ***14*** | 2 | 1 | i.O. | i.O. | i.O. | i.O. | i.O. | i.O. |

Die Ergebnisse aus Tabelle 6 zeigen, dass wässrige Zusammensetzungen von Mercaptosilanen der Formel (II) Probleme mit der Lagerstabilität aufweisen. Die Ergebnisse zeigen aber ebenso gut, dass durch den Zusatz von Aminosilanen der Formel (I) diese Lagerprobleme stark reduziert, bzw. eliminiert werden können. Es können erfindungsgemässe Zusammensetzungen hergestellt werden, welche über exzellente Lagerstabilität verfügen.

## Patentansprüche

1. Wässrige Haftvermittlerzusammensetzung umfassend
- mindestens ein Aminosilan der Formel(I) oder mindestens ein Aminosiloxan **AS,** welches aus einer Kondensationsreaktion eines Aminosilans der Formel (I) mit mindestens einem weiteren Silan erhalten wird, 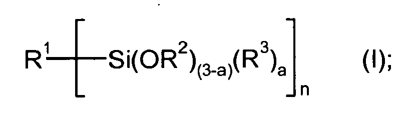
- mindestens ein Mercaptosilan der Formel (II); 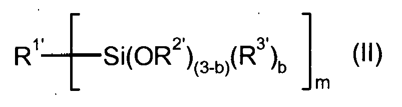
und welche entweder einen Gehalt von 0 bis 45 Gew.-%, insbesondere 0 bis 25 Gew.-%, bezogen auf das Gewicht des Aminosilans oder des Aminosiloxans **AS,** an Alkylsilanen aufweist,
oder in welcher das Verhältnis der Anzahl Mole Alkylsilane zu Anzahl Mole Aminosilan oder Aminosiloxan **AS** einen Wert von 0 - 0.60, insbesondere 0 - 0.33 beträgt;
wobei
R¹ für einen n-wertigen organischen Rest mit mindestens einer primären und/oder sekundären Aminogruppe steht,
R^{1'} für einen m-wertigen organischen Rest mit mindestens einer Mercaptogruppe steht,
R² und R^{2'} unabhängig von einander für H oder eine Alkylgruppe mit 1 bis 4 C-Atome oder für eine Acylgruppe steht;
R³ und R^{3'} unabhängig von einander für H oder für eine Alkylgruppe mit 1 bis 10 C-Atome steht;
a und b unabhängig von einander für einen Wert von 0, 1 oder 2 steht;
und n und m unabhängig voneinander für die Werte 1, 2, 3 und 4 steht.

2. Wässrige Haftvermittlerzusammensetzung gemäss Anspruch 1, **dadurch gekennzeichnet, dass** die Zusammensetzung zusätzlich mindestens ein Tetraalkoxysilan der Formel (IV) aufweist
Si(OR⁴)₄ (IV)
wobei R⁴ unabhängig von einander für H oder eine Allylgruppe mit 1 bis 4 C-Atome oder für eine Acylgruppe steht.

3. Wässrige Haftvermittlerzusammensetzung gemäss einem der vorhergehenden Ansprüche, **dadurch gekennzeichnet, dass** das Aminosilan der Formel (I) die Formel (V) aufweist 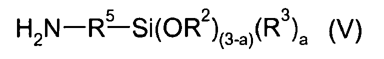 wobei R⁵ für eine lineare oder verzweigte Alkylengruppe mit 1 bis 6 C-Atomen, insbesondere für Propylen, steht.

4. Wässrige Haftvermittlerzusammensetzung gemäss einem der Ansprüche 1 bis 2, **dadurch gekennzeichnet, dass** das Aminosilan der Formel(I) sekundäre Aminogruppen aufweist.

5. Wässrige Haftvermittlerzusammensetzung gemäss Anspruch 4, **dadurch gekennzeichnet, dass** das Aminosilan der Formel (I) die Formel (VI) oder (VII) oder (VIII) aufweist 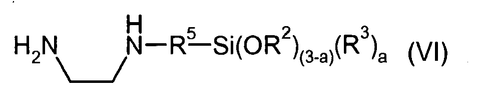 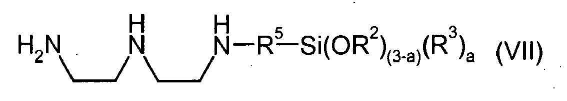 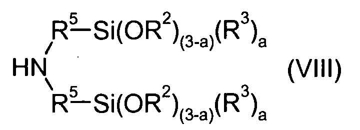 wobei R⁵ für eine lineare oder verzweigte Alkylengruppe mit 1 bis 6 C-Atomen, insbesondere für Propylen, steht.

6. Wässrige Haftvermittlerzusammensetzung gemäss einem der vorhergehenden Ansprüche, **dadurch gekennzeichnet, dass** das Mercaptosilan der Formel (II) die Formel (IX) aufweist 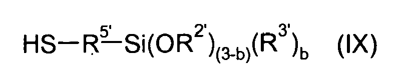 wobei R^{5'} für eine lineare oder verzweigte Alkylengruppe mit 1 bis 6 C-Atomen, insbesondere für Propylen, steht.

7. Wässrige Haftvermittlerzusammensetzung gemäss einem der vorhergehenden Ansprüche, **dadurch gekennzeichnet, dass** die wässrige Haftvermittlerzusammensetzung weiterhin mindestens ein Tensid umfasst.

8. Wässrige Haftvermittlerzusammensetzung gemäss einem der vorhergehenden Ansprüche, **dadurch gekennzeichnet, dass** der Gewichtsanteil der Summe von Aminosilan der Formel (I), Aminosiloxan **AS,** Mercaptosilan der Formel (II) und Wasser sowie, falls vorhanden, Tetraalkoxysilan der Formel (IV) mehr als 80 Gew.-%, insbesondere mehr als 90 Gew.-%, am Gewicht der wässrigen Haftvermittlerzusammensetzung beträgt.

9. Wässrige Haftvermittlerzusammensetzung gemäss einem der vorhergehenden Ansprüche, **dadurch gekennzeichnet, dass** der Gewichtsanteil der Summe von Aminosilan der Formel (I), Aminosiloxan **AS,** Mercaptosilan der Formel (II) und, falls vorhanden, Tetraalkoxysilan der Formel (IV) mehr als 0.1 Gew.-%, insbesondere zwischen 0.1 und 10 Gew.-%, bevorzugt zwischen 0.1 und 5 Gew. -%, meist bevorzugt zwischen 0.5 bis 2 Gew.-%, am Gewicht der wässrigen Haftvermittlerzusammensetzung beträgt.

10. Wässrige Haftvermittlerzusammensetzung gemäss einem der vorhergehenden Ansprüche, **dadurch gekennzeichnet, dass** die wässrige Haftvermittlerzusammensetzung aus Wasser, mindestens einem Aminosilan der Formel (I) oder mindestens einem Aminosiloxan **AS,** mindestens einem Mercaptosilan der Formel (II) und gegebenenfalls einem Tensid und einer Säure, insbesondere einer organischen Säure, sowie der daraus möglichen Hydrolyse- und / oder Kondensationsprodukte besteht.

11. Wässrige Haftvermittlerzusammensetzung gemäss einem der vorhergehenden Ansprüche, **dadurch gekennzeichnet, dass** die wässrige Haftvermittlerzusammensetzung zweikomponentig ist und aus einer ersten Komponente **K1** und einer zweiten Komponente **K2** besteht, wobei die erste Komponente **K1** mindestens das Aminosilan der Formel (I) oder das Aminosiloxan **AS** und das Mercaptosilan der Formel (II) und, falls vorhanden, das Tetraalkoxysilan der Formel (IV) umfasst und die zweite Komponente **K2** mindestens Wasser umfasst.

12. Packung (6) bestehend aus
einer Verpackung (5), welche zwei durch mindestens eine Trennwand (3) voneinander getrennten Kammern (1,2) aufweist;
und
einer wässrigen zweikomponentigen Haftvermittlerzusammensetzung gemäss Anspruch 11,
wobei die erste Komponente **K1** in der ersten Kammer (1) und die zweite Komponente **K2** in der zweiten Kammer (2) vorhanden ist.

13. Verwendung einer wässrigen Haftvermittlerzusammensetzung gemäss einem der Ansprüche 1 bis 11 als Primer.

14. Verfahren zur Verklebung oder zum Abdichten umfassend die Schritte
i) Applikation einer wässrigen Haftvermittlerzusammensetzung gemäss einem der Ansprüche 1 bis 11 auf ein zu verklebendes oder abzudichtendes Substrat **S1**
ii) Applikation eines Klebstoffes oder Dichtstoffes auf die abgelüftete Zusammensetzung, welche sich auf dem Substrat **S1** befindet
iii) Kontaktieren des Klebstoffs oder Dichtstoffes mit einem zweiten Substrat **S2;** oder
i') Applikation einer wässrigen Haftvermittlerzusammensetzung gemäss einem der Ansprüche 1 bis 11 auf ein zu verklebendes oder abzudichtendes Substrat **S1**
ii') Applikation eines Klebstoffes oder Dichtstoffes auf die Oberfläche eines zweiten Substrates **S2**
iii') Kontaktieren des Klebstoffes oder Dichtstoffes mit der abgelüfteten Zusammensetzung, welche sich auf dem Substrat **S1** befindet;
oder
i") Applikation einer wässrigen Haftvermittlerzusammensetzung gemäss einem der Ansprüche 1 bis 11 auf ein zu verklebendes oder abzudichtendes Substrat **S1**
ii") Ablüften der Zusammensetzung
iii") Applikation eines Klebstoffes oder Dichtstoffes zwischen die Oberflächen des Substrates **S1** und **S2,**
wobei das zweite Substrat **S2** aus demselben oder unterschiedlichem Material wie das Substrat **S1** besteht.

15. Verwendung von Mercaptosilanen zur Haftverbesserung von feuchtigkeitshärtenden einkomponentigen Polyurethanklebstoffen auf Silber oder auf Silber-basierenden Zusammensetzungen oder Legierungen

16. Artikel zu dessen Herstellung ein Verfahren gemäss Anspruch 14 durchgeführt wird.

## Claims

1. An aqueous adhesion promoter composition which comprises
- at least one aminosilane of the formula (I) or at least one aminosiloxane **AS** obtained from a condensation reaction of an aminosilane of the formula (I) with at least one further silane 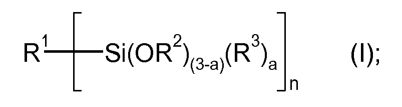
- at least one mercaptosilane of the formula (II); 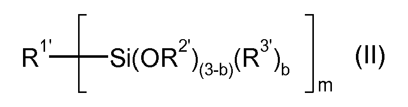 and either which has an alkylsilanes content of 0% to 45% by weight, more particularly 0% to 25% by weight, based on the weight of the aminosilane or aminosiloxane **AS,**
or in which the ratio of the number of moles of alkylsilanes to the number of moles of aminosilane or aminosiloxane **AS** amounts to a value of 0 - 0.60, more particularly 0 - 0.33;
where
R¹ is an n-valent organic radical having at least one primary and/or secondary amino group,
R^{1'} is an m-valent organic radical having at least one mercapto group,
R² and R^{2'} each independently are H or an alkyl group having 1 to 4 C atoms or are an acyl group;
R³ and R^{3'} each independently are H or are an alkyl group having 1 to 10 C atoms;
a and b each independently stand for a value of 0, 1 or 2;
and n and m each independently stand for the values 1, 2, 3, and 4.

2. The aqueous adhesion promoter composition of claim 1, **characterized in that** the composition additionally contains at least one tetraalkoxysilane of the formula (IV)
Si(OR⁴)₄ (IV)
where R⁴ each independently is H or an alkyl group having 1 to 4 C atoms or is an acyl group.

3. The aqueous adhesion promoter composition of any one of the preceding claims, **characterized in that** the aminosilane of the formula (I) has the formula (V) 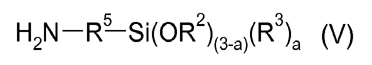 where R⁵ is a linear or branched alkylene group having 1 to 6 C atoms, more particularly propylene.

4. The aqueous adhesion promoter composition of any of claims 1 to 2, **characterized in that** the aminosilane of the formula (I) contains secondary amino groups.

5. The aqueous adhesion promoter composition of claim 4, **characterized in that** the aminosilane of the formula (I) has the formula (VI) or (VII) or (VIII) 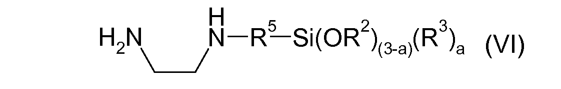 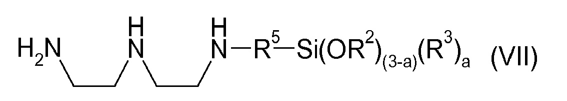 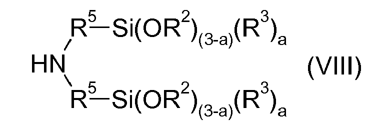 where R⁵ is a linear or branched alkylene group having 1 to 6 C atoms, more particularly propylene.

6. The aqueous adhesion promoter composition of any one of the preceding claims, **characterized in that** the mercaptosilane of the formula (II) has the formula (IX) 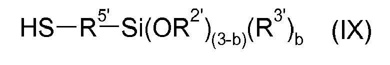 where R^{5'} is a linear or branched alkylene group having 1 to 6 C atoms, more particularly propylene.

7. The aqueous adhesion promoter composition of any one of the preceding claims, **characterized in that** the aqueous adhesion promoter composition further comprises at least one surfactant.

8. The aqueous adhesion promoter composition of any one of the preceding claims, **characterized in that** the weight fraction of the total of aminosilane of the formula (I), aminosiloxane **AS,** mercaptosilane of the formula (II), and water and also, if present, tetraalkoxysilane of the formula (IV) is more than 80% by weight, in particular more than 90% by weight, based on the weight of the aqueous adhesion promoter composition.

9. The aqueous adhesion promoter composition of any one of the preceding claims, **characterized in that** the weight fraction of the total of aminosilane of the formula (I), aminosiloxane **AS,** mercaptosilane of the formula (II) and, if present, tetraalkoxysilane of the formula (IV) is more than 0.1 % by weight, more particularly between 0.1 % and 10% by weight, preferably between 0.1 % and 5% by weight, most preferably between 0.5% to 2% by weight, based on the weight of the aqueous adhesion promoter composition.

10. The aqueous adhesion promoter composition of any one of the preceding claims, **characterized in that** the aqueous adhesion promoter composition is composed of water, at least one aminosilane of the formula (I) or at least one aminosiloxane **AS,** at least one mercaptosilane of the formula (II), and, if desired, a surfactant and an acid, more particularly an organic acid, and also of the possible hydrolysis and/or condensation products thereof.

11. The aqueous adhesion promoter composition of any one of the preceding claims, **characterized in that** the aqueous adhesion promoter composition is two-component and is composed of a first component **K1** and a second component **K2,**
the first component **K1**
comprising at least the aminosilane of the formula (I) or the aminosiloxane **AS** and the mercaptosilane of the formula (II) and, if present, the tetraalkoxysilane of the formula (IV)
and the second component **K2** comprising at least water.

12. A packaging form (6) composed of
a pack (5) which has two chambers (1, 2) separated from one another by at least one partition (3);
and
an aqueous two-component adhesion promoter composition of claim 11, the first component **K1** being present in the first chamber (I) and the second component **K2** in the second chamber (2).

13. The use of an aqueous adhesion promoter composition of any of claims 1 to 11 as a primer.

14. A method of adhesive bonding or sealing, comprising the steps of
i) applying an aqueous adhesion promoter composition of any of claims 1 to 11 to a substrate **S1** to be bonded or sealed
ii) applying an adhesive or sealant to the flashed-off composition located on the substrate **S1**
iii) contacting the adhesive or sealant with a second substrate **S2;**
or
i') applying an aqueous adhesion promoter composition of any of claims 1 to 11 to a substrate **S1** to be bonded or sealed
ii') applying an adhesive or sealant to the surface of a second substrate **S2**
iii') contacting the adhesive or sealant with the flashed-off composition which is located on the substrate **S1;**
or
i") applying an aqueous adhesion promoter composition of any of claims 1 to 11 to a substrate **S1** to be bonded or sealed
ii") flashing off the composition
iii") applying an adhesive or sealant between the substrate surfaces **S1** and **S2,**
where the second substrate **S2** is composed of the same material as or different material to the substrate **S1.**

15. The use of mercaptosilanes for promoting the adhesion of moisture-curing one-component polyurethane adhesives to silver or to silver-based compositions or alloys.

16. An article produced by a method of claim 14.

## Revendications

1. Composition aqueuse de promoteur d'adhérence, comprenant
- au moins un aminosilane de formule (I) ou au moins un aminosiloxane **AS** qui est obtenu par une réaction de condensation d'un aminosilane de formule (I) avec au moins un autre silane, 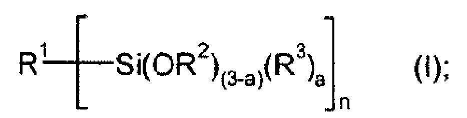
- au moins un mercaptosilane de formule (II) 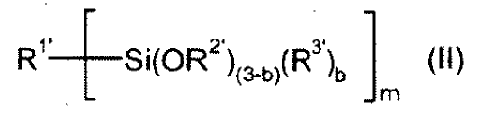 et soit qui présente une teneur de 0 à 45 % en poids, en particulier de 0 à 25 % en poids, par rapport au poids de l'aminosilane ou de l'aminosiloxane **AS,** en alkylsilanes,
soit dans lequel le rapport du nombre de moles d'alkylsilanes au nombre de moles d'aminosilane ou d'aminosiloxane **AS** a une valeur de 0 - 0,60, en particulier de 0 - 0,33 ;
R¹ représente un radical organique n-valent comportant au moins un groupe amino primaire et/ou un groupe amino secondaire,
R^{1'} représente un radical organique m-valent comportant au moins un groupe mercapto,
R² et R^{2'} représentent, indépendamment l'un de l'autre, H ou un groupe alkyle ayant de 1 à 4 atomes de carbone ou un groupe acyle ;
R³ et R^{3'} représentent, indépendamment l'un de l'autre, H ou un groupe alkyle ayant de 1 à 10 atomes de carbone ;
a et b représentent, indépendamment l'un de l'autre, une valeur de 0, 1 ou 2 ;
et n et m représentent, indépendamment l'un de l'autre, les valeurs 1, 2, 3 et 4.

2. Composition aqueuse de promoteur d'adhérence selon la revendication 1, **caractérisée en ce que** la composition en outre comporte au moins un tétra-alcoxysilane de formule (IV)
Si (OR⁴)₄ (IV)
R⁴ représentant, indépendamment les uns des autres, H ou un groupe alkyle ayant de 1 à 4 atomes de carbone ou un groupe acyle.

3. Composition aqueuse de promoteur d'adhérence selon l'une quelconque des revendications précédentes, **caractérisée en ce que** l'aminosilane de formule (I) présente la formule (V)
H₂N-R⁵-Si (OR²) ₍₃₋ₐ₎ (R³)ₐ (V)
R⁵ représentant un groupe alkylène linéaire ou ramifié ayant de 1 à 6 atomes de carbone, en particulier propylène.

4. Composition aqueuse de promoteur d'adhérence selon l'une quelconque des revendications 1 et 2, **caractérisée en ce que** l'aminosilane de formule (I) comporte des groupes amino secondaires.

5. Composition aqueuse de promoteur d'adhérence selon la revendication 4, **caractérisée en ce que** l'aminosilane de formule (I) présente la formule (VI) ou (VII) ou (VIII) 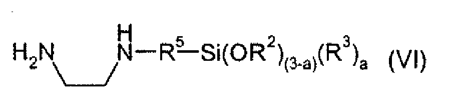 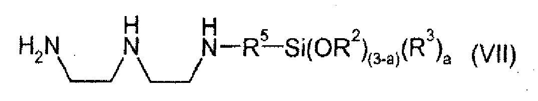 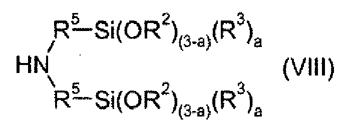 R⁵ représentant un groupe alkylène linéaire ou ramifié ayant de 1 à 6 atomes de carbone, en particulier propylène.

6. Composition aqueuse de promoteur d'adhérence selon l'une quelconque des revendications précédentes, **caractérisée en ce que** le mercaptosilane de formule (II) présente la formule (IX)
HS-R^{5'}-SI (OR^{2'}) _{(3-b)} (R^{3'})_{b} (IX)
R^{5'} représentant un groupe alkylène linéaire ou ramifié ayant de 1 à 6 atomes de carbone, en particulier propylène.

7. Composition aqueuse de promoteur d'adhérence selon l'une quelconque des revendications précédentes, **caractérisée en ce que** la composition aqueuse de promoteur d'adhérence comporte en outre au moins un tensioactif.

8. Composition aqueuse de promoteur d'adhérence selon l'une quelconque des revendications précédentes, **caractérisée en ce que** la proportion pondérale de la somme de l'aminosilane de formule (I), de l'aminosiloxane **AS,** du mercaptosilane de formule (II) et de l'eau ainsi que, s'il est présent, du tétra-alcoxysilane de formule (IV) est de plus de 80 % en poids, en particulier de plus de 90 % en poids, par rapport au poids de la composition aqueuse de promoteur d'adhérence.

9. Composition aqueuse de promoteur d'adhérence selon l'une quelconque des revendications précédentes, **caractérisée en ce que** la proportion pondérale de la somme de l'aminosilane de formule (I), de l'aminosiloxane **AS,** du mercaptosilane de formule (II) et, s'il est présent, du tétra-alcoxysilane de formule (IV) est de plus de 0,1 % en poids, en particulier est comprise entre 0,1 et 10 % en poids, de préférence entre 0,1 et 5 % en poids, de façon particulièrement préférée entre 0,5 et 2 % en poids, par rapport au poids de la composition aqueuse de promoteur d'adhérence.

10. Composition aqueuse de promoteur d'adhérence selon l'une quelconque des revendications précédentes, **caractérisée en ce que** la composition aqueuse de promoteur d'adhérence est constituée d'eau, d'au moins un aminosilane de formule (I) ou d'au moins un aminosiloxane **AS,** d'au moins un mercaptosilane de formule (II) et éventuellement d'un tensioactif et d'un acide, en particulier d'un acide organique, ainsi que des produits d'hydrolyse et/ou de condensation possibles à partir de ceux-ci.

11. Composition aqueuse de promoteur d'adhérence selon l'une quelconque des revendications précédentes, **caractérisée en ce que** la composition aqueuse de promoteur d'adhérence est bicomposant et est constituée d'un premier composant **K1** et d'un second composant **K2,** le premier composant **K1** comprenant au moins l'aminosilane de formule (I) ou l'aminosiloxane **AS** et le mercaptosilane de formule (II) et, s'il est présent, le tétra-alcoxysilane de formule (IV)
et le second composant **K2** comprenant au moins de l'eau.

12. Paquet (6) constitué
d'un emballage (5) qui comporte deux chambres (1,2) séparée l'une de l'autre par au moins une paroi de séparation (3) ;
et
d'une composition aqueuse de promoteur d'adhérence bicomposant selon la revendication 11,
le premier composant **K1** étant présent dans la première chambre (1) et le second compartiment **K2** étant présent dans la seconde chambre (2).

13. Utilisation d'une composition aqueuse de promoteur d'adhérence selon l'une quelconque des revendications 1 à 11 en tant que primaire.

14. Procédé pour le collage ou l'étanchéification, comprenant les étapes
i) application d'une composition aqueuse de promoteur d'adhérence selon l'une quelconque des revendications 1 à 11 sur un support **S1** à coller ou à étanchéifier
ii) application d'un adhésif ou d'un matériau d'étanchéité sur la composition évaporée, qui se trouve sur le support **S1**
iii) mise en contact de l'adhésif ou du matériau d'étanchéité avec un deuxième support **S2 ;**
ou
i') application d'une composition aqueuse de promoteur d'adhérence selon l'une quelconque des revendications 1 à 11 sur un support **S1** à coller ou à étanchéifier
ii') application d'un adhésif ou d'un matériau d'étanchéité sur la surface d'un deuxième support **S2**
iii') mise en contact de l'adhésif ou du matériau d'étanchéité avec la composition évaporée, qui se trouve sur le support **S1** ;
ou
i" ) application d'une composition aqueuse de promoteur d'adhérence selon l'une quelconque des revendications 1 à 11 sur un support **S1** à coller ou à étanchéifier
ii") évaporation de la composition
iii") application d'un adhésif ou d'un matériau d'étanchéité entre les surfaces des supports **S1** et **S2,**
le deuxième support **S2** étant constitué du même matériau que le support **S1** ou d'un matériau différent de celui-ci.

15. Utilisation de mercaptosilanes pour l'amélioration de l'adhérence d'adhésifs polyuréthanne monocomposant durcissant à l'humidité, à de l'argent ou à des compositions ou alliages à base d'argent.

16. Article pour la fabrication duquel est effectué un procédé selon la revendication 14.
